# EUROPÄISCHE PATENTSCHRIFT

(11) **EP 0 671 301 B1**
(45) Veröffentlichungstag und Bekanntmachung des Hinweises auf die Patenterteilung: **22.04.1998**
(21) Anmeldenummer: 95102604.6
(22) Anmeldetag: 24.02.1995
(51) Int. Cl.: B60T 1/08, F16D 65/78, B60T 13/58, B60K 41/20, F02D 13/04

(54) **Antriebseinheit und Verfahren zum Betreiben der Antriebseinheit**
Drive unit and operating method therefor
Unité d'entraînement et procédé pour l'actionnement d'une telle unité

(30) Priorität: 11.03.1994 DE 4408350
(43) Veröffentlichungstag der Anmeldung: 13.09.1995
(73) Patentinhaber: VOITH TURBO GMBH & CO. KG, D-74564 Crailsheim (DE)
(72) Erfinder: Vogelsang, Klaus, D-74564 Crailheim (DE); Edelmann, Peter, D-89522 Heidenheim (DE)
(74) Vertreter: Weitzel, Wolfgang, Dr.-Ing. Patentanwalt

(56) Entgegenhaltungen:
- WO-A-94/00323
- DE-A- 4 010 970
- DE-C- 3 301 560
- DE-C- 3 713 580

## Beschreibung

Die Erfindung betrifft eine Antriebseinheit mit einem Motor und einem Retarder gemäß dem Oberbegriff von Anspruch 1. Eine solche Antriebseinheit ist aus der DE 37 13 580 C1 bekanntgeworden.

Eine derartige Antriebseinheit weist zwar eine Reihe positiver Eigenschaften auf, ist jedoch für den alleinigen Einsatz bei hohen erforderlichen Gesamtbremsleistungen, insbesondere im Dauerbremsbetrieb, nur durch entsprechende aufwendige Auslegung, insbesondere des Retarders und der dazugehörigen Kühleinrichtung möglich.

Der Erfindung liegt die Aufgabe zugrunde, eine Antriebseinheit für Fahrzeuge gemäß dem Oberbegriff derart zu gestalten, daß insbesondere im Dauerbremsbetrieb eines Fahrzeuges ein stabiles Bremsverhalten realisiert wird, bei gleichzeitig geringem Bauraumbedarf für die einzelnen Antriebselemente, sowie der Möglichkeit einer feinfühligen Abbremsung des Fahrzeuges.

Die erfindungsgemäße Lösung der Aufgabe ist durch die kennzeichnenden Merkmale des Anspruches 1 charakterisiert. Das erfindungsgemäße Verfahren ist durch die kennzeichnenden Merkmale des Anspruchs 2 charakterisiert. Vorteilhafte Ausführungen sind in den Unteransprüchen wiedergegeben.

Im allgemeinen werden Retarder im Antriebsstrang des Fahrzeuges entweder in Kraftflußrichtung dem Getriebe nachgeschaltet als selbständige Einheit eingebaut oder in einem Schaltgetriebe integriert. Erfindungsgemäß ist der Retarder jedoch dem Getriebe vorgeschaltet, weshalb unter der Ausdrucksweise "Retarder" ein sogenannter Primärretarder verstanden werden soll, der im Traktionsbetrieb im Kraftfluß dem Getriebe vorgeschaltet ist und dessen Wirkung auf die Antriebsräder vom Schaltzustand abhängig ist.

Die erfindungsgemäße Kombination eines als Pumpe für die Kühlmittelflüssigkeit betreibbaren Primärretarders mit einer Motorbremseinrichtung bringt mehrere Vorteile mit sich. Zum einen sind dabei die bereits bekannten Vorteile eines als Pumpe für die Kühlmittelflüssigkeit betreibbaren Retarders zu nennen, zum anderen ermöglicht die Vorschaltung des Retarders vor die Motorbremseinrichtung eine feinfühlige Einstellung des Bremsmomentes, auch bei geringem Gesamtbremsleistungsbedarf. Erfindungsgemäß wird der Retarder mit einer Motorbremse zu einer Gesamt-Bremseinheit (GBE) derart zusammengeschaltet, daß der Retarder bei einem Bremsvorgang zeitlich vor der Motorbremse eingreifen kann, d.h. ein erster Bremsanteil wird vom Retarder, ein zweiter Bremsanteil von der Motorbremseinrichtung aufgebracht. Vorzugsweise wird deren Größe derart festgelegt, daß die beiden Anteile jeweils die Hälfte der Gesamt-Bremsleistung ausmachen, wobei der Anteil der durch den Retarder aufgebracht wird vorzugsweise stufenlos veränderlich einstellbar ist.

Im allgemeinen sind drei Fälle zu unterscheiden:
1) die aufzubringende erforderliche Bremsleistung ist kleiner als 50% bezogen auf die mögliche Gesamt-Bremsleistung, die von beiden Bremseinrichtungen aufgebracht werden kann;
2) die erforderliche Bremsleistung beträgt 50% der möglichen Gesamt-Bremsleistung, die von beiden Bremseinrichtungen aufgebracht werden kann;
3) die aufzubringende erforderliche Bremsleistung ist größer als 50% bezogen auf die mögliche Gesamt-Bremsleistung, die von beiden Bremseinrichtungen insgesamt aufgebracht werden kann;

Im ersten Fall wird die gesamte Bremsleistung allein durch den Pumpenretarder aufgebracht. Der durch den Pumpenretarder aufgebrachte Bremsleistungsanteil ist vorzugsweise stufenlos einstellbar. Dies ist durch eine geeignete Gestaltung der Antriebseinheit realisierbar.

Im zweiten Fall wird der Bremsleistungsanteil allein von der Motorbremseinrichtung aufgebracht, während im dritten Fall der Anteil von 50% durch die Motorbremseinrichtung und der restliche Anteil vom Retarder aufgebracht wird, vorzugsweise stufenlos. Der Retarder ist vorzugsweise auf maximal 50% einer möglich erforderlichen Gesamt-Bremsleistung ausgelegt.

Möglichkeiten zur Änderung des Bremsmomentes im Bremsbetrieb sind die Nutzung einer entsprechenden Ventilkombination im Anlauf des Retarders oder die Anwendung der Verschiebung des Statorschaufelrades.

Vorzugsweise ist der Retarder ständig voll gefüllt. Dies ermöglicht die Erzielung eines hohen Bremsmomentes bei günstigen Retarderabmessungen, was sich in einem geringeren Platzbedarf wiederspiegelt.

Desweiteren sind aus der Gesamtheit der vorteilhaften Eigenschaften ein optimales Bremsverhalten - vor allem in Bezug auf die Stabilität des Bremsbetriebes -, die Möglichkeit des Verzichtes auf eine separate Kühlmittelumwälzpumpe im Kühlmittelkreislauf und damit Einsparung an Bauraum, die Nutzung des Retarders als Lüfterantrieb sowie die Nutzung der anfallenden Wärme zur Beheizung des Fahrgastraumes und im wesentlichen eine Vermeidung von Leistungsverlusten im Nicht-Bremsbetrieb, d.h. im Traktionsbetrieb zu nennen.

Die erfindungsgemäße Lösung der Aufgabe ist nachfolgend anhand der Figuren erläutert. Es zeigen:
- Fig. 1a bis 1d: Bremsleistungdiagramme der einzelnen Bremssysteme und des Gesamtbremssystems, umfassend Retarder und Motorbremseinrichtung
- Fig. 2: eine erfindungsgemäße Antriebseinheit, bei der eine Änderung des Verhältnisses der Zu- und Ablaufquerschnitte des Retarders und die Änderung des Bremsmomentes mittels eines Ventiles erfolgt;
- Fig. 3: eine Möglichkeit der Bremsmomentenänderung mittels eines stufenlosen Drosselventiles;
- Fig. 4: eine Möglichkeit der Änderung des Bremsmomentes durch Verschiebung des Statorschaufelrades.

In den Figuren 1a und 1b sind mögliche Bremsleistungsdiagramme der beiden Dauerbremseinrichtungen Pumpenretarder und Motorbremseinrichtung verdeutlicht. Die Figur 1a gibt das Bremsleistungdiagramm eines Pumpenretarders wieder. Die Bremsleistung des Pumpenretarders Pᵣₑₜ ist zu diesem Zweck über der Motordrehzahl nₘₒₜ aufgetragen. Aus dem Diagramm sind verschiedene zu realisierende Bremsmomentenkennlinien erkennbar:
1) die Bremsleistung bzw. das Bremsmoment bei Zu- und Abschaltung des Pumpenretarders bei einem bestimmten Füllungsgrad
2) die stufenweise Einstellbarkeit der Bremsmomentes des Pumpenretarders durch Änderung des Füllungsgrades oder andere bauliche Maßnahmen
3) die stufenlose Einstellbarkeit des Bremsmomentes des Pumpenretarders durch Änderung des Füllungsgrades oder andere bauliche Maßnahmen, beispielsweise Statorschaufelradverschiebung

Der erste Fall wird im Bremsleistungs - Motordrehzahldiagramm (Pᵣₑₜ-nₘₒₜ-Diagramm) nur durch die Kurve max und theoretisch betrachtet durch die Abzissenachse des Diagrammes beschrieben. Für einen bestimmten Füllungsgrad bei Zuschaltung des Retarders entspricht die Bremsmomentenkennlinie im Diagramm der mit max bezeichneten. Die Abschaltung des Retarders, d.h. entweder bei Entleerung oder im Pumpenbetrieb bei einem Verhältnis von Zulauf- zu Ablaufquerschnitt aus dem Retarder von etwa 1, wird durch eine Bremsmomentenkennlinie beschrieben, die theoretisch betrachtet der Abszisse des Diagrammes entspricht.

Im zweiten Fall können mit dem Retarder eine bestimmte Anzahl verschiedener Bremsmomentenkennlinien zwischen der Abszisse des Diagrammes und der Kennlinie max für das maximale Bremsmoment gefahren werden.

Im dritten Fall kann jede Kennlinie im Feld zwischen der Abszissenachse und der Kennlinie für das maximale Bremsmoment gefahren werden.

Die Figur 1b verdeutlicht die mögliche Bremsleistung mit einer Motorbremseinrichtung. Deren Bremsleistung ist in der Regel nicht stufenlos veränderbar. Die Zuschaltung der Motorbremseinrichtung entspricht hier der Kennlinie max und die Abschaltung der Abzissenachse, d.h. der Bremsleistungsanteil der Motorbremseinrichtung ist gleich null.

Die Figur 1c verdeutlicht die Anwendung des erfindungsgemäßen Verfahrens der Vorschaltung des Pumpenretarders vor die Motorbremseinrichtung bei einem Gesamtbremsleistungsbedarf von kleiner 50% in einem Motordrehzahl (nₘₒₜ) - Gesamtbremsleistungsdiagramm (P_{ges}). Unter Gesamtbremsleistung P_{ges} wird dabei die Summe aus den Bremsleistungsanteilen Pᵣₑₜ und Pₘₒₜ verstanden. Da erfindungsgemäß der Pumpenretarder bei Dauerbremsvorgängen der Motorbremseinrichtung immer vorgeschaltet ist, wird die gesamte Bremsleistung bei einer erforderlichen Gesamtbremsleistung P_{ges} < 50% allein durch den Pumpenretarder aufgebracht. Im dargestellten Bremsleistungsdiagramm sind die Anteile der Bremsleistung des Pumpenretarders Pᵣₑₜ eingetragen, die der Gesamtbremsleistung P_{ges} entsprechen. Der durch den Pumpenretarder aufgebrachte Bremsleistungsanteil ist dabei von 0% bis zur erforderlichen Gesamtbremsleistung stufenlos einstellbar. Im dargestellten Diagramm sind zur Verdeutlichung einige Leistungskurven aufgetragen.

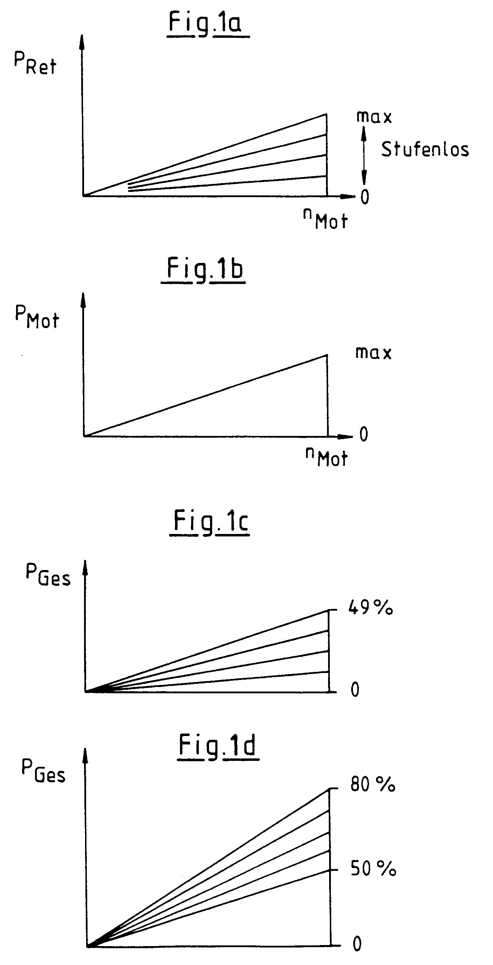

In der Figur 1d ist das Bremsleistungsdiagramm für den Fall einer erforderlichen Gesamtbremsleistung P_{ges} der Dauerbremseinrichtungen von größer als 50% der bei vollständig ausgenutzer Leistung der beiden Dauerbremseinrichtungen möglichen Gesamtbremsleistung P_{ges} von 100% dargestellt. Der Anteil der Bremsleistung der von der Motorbremseinrichtung aufgebracht wird, ist vorzugsweise auf 50% der Gesamtbremsleistung P_{ges} beschränkt, während der restliche Bremsleistungsanteil von vom Pumpenretarder stufenlos dazuaddiert werden kann. Im dargestellten Diagramm werden bei einer Gesamtbremsleistung von P_{ges}=80% 50% von der Motorbremseinrichtung aufgebracht, während die restlichen 30% durch stufenlose Zuschaltung des Pumpenretarders dazuaddiert werden. Die von der Motorbremseinrichtung aufgebrachte Leistung von 50% ist sozusagen schwarz/weiß zuschaltbar.

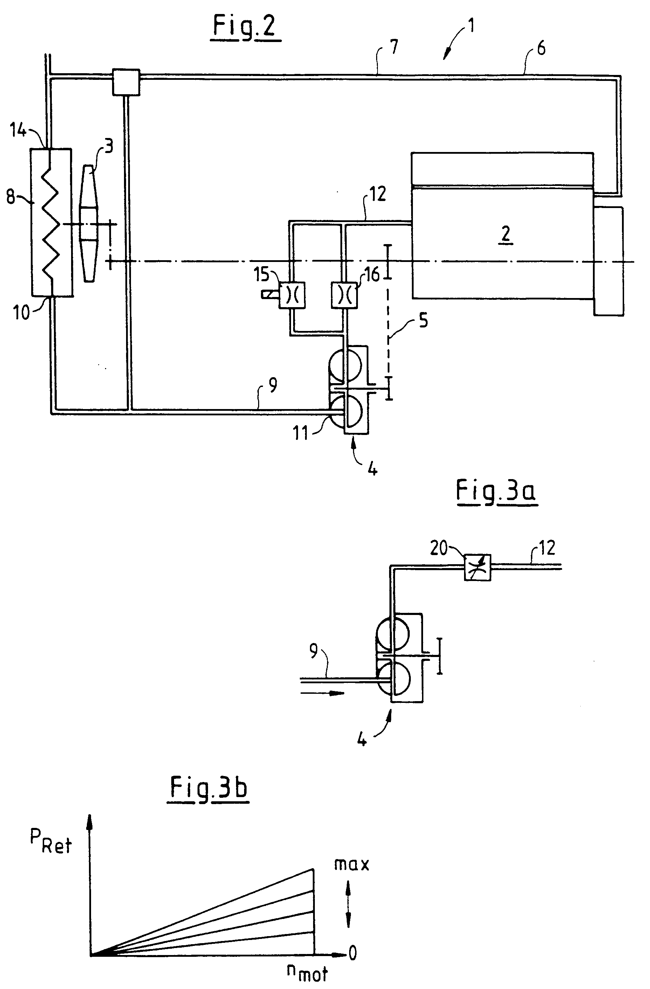

Die Figuren 2 bis 4 verdeutlichen verschiedene Ausführungen einer Antriebseinheit für die Steuerung des Bremsmomentes eines Retarders entsprechend der DE 44 08 349 A1. Die erforderlichen Einheiten und Bauteile der Steuer- und Regelungstechnik zur Realisierung des Vorschaltens des Retarders vor die Motorbremseinrichtung sind in den Ausführungen nicht mit dargestellt.

Die Figur 2 zeigt eine Ausführung einer erfindungsgemäß aufgebauten Antriebseinheit 1 bei der die Möglichkeit der Pumpenretardersteuerung auf das Zu- und Abschalten beschränkt sind, d.h. es ist nur eine einzige Stufung des Bremsmomentes möglich. Die Antriebseinheit 1 umfaßt einen Motor 2, der vorzugsweise für den Einsatz im Fahrzeug als Verbrennungsmotor ausgeführt ist, ein hier nicht dargestelltes Getriebe und einen Retarder 4. Der Retarder 4 befindet sich mit dem Motor 2, insbesondere der Kurbelwelle beispielsweise mittels eines Vorgeleges 5 in ständiger Triebverbindung und ist in Kraftflußrichtung dem Getriebe vorgeschaltet. Für die Anordnung des Retarders am Motor zur Realisierung der drehfesten Verbindung von Retarder und Kurbelwelle des Motors sind verschiedene Ausführungen möglich.

Der Motor 2 und der Retarder 4 weisen einen gemeinsamen Kühlmittelkreislauf 6 auf, dessen Kühlmittel 7 zugleich als Betriebsflüssigkeit des Retarders fungiert. Der Retarder 4 ist als Pumpe für das Kühlmittel einsetzbar, weshalb der Retarder 4 nachfolgend als Pumpenretarder 4 bezeichnet wird. Weitere Elemente des Fahrzeuges und der Antriebseinheit sind nicht dargestellt. Aufgrund der Anordnung des Retarders 4 in Kraftflußrichtung vor dem Getriebe bleibt der Pumpenretarder in allen Betriebszuständen mit dem Motor gekoppelt, weshalb er auch als Pumpe zur Umwälzung für das Kühlmittel 7 ausnutzbar ist und keine leistungsverzehrende und wärmebelastende Leerlaufventilationsleistung im Retarder anfällt.

Im Kühlmittelkreislauf 6 ist ein Kühler 8 mit einem Ventilator 3 vorgesehen. Der Ventilator 3 kann vom Motor 2 oder aber auch, hier jedoch nicht dargestellt, vom Retarder 4 angetrieben werden. Eine Leitung 9 führt dabei vom Austritt 10 des Kühlers 8 zum Flüssigkeitseintritt 11 in den Retarder 4, während eine Leitung 12 vom Flüssigkeitsaustritt 13 aus dem Retarder zum Flüssigkeitseintritt 14 in den Kühler 8 über den Motor 2 verläuft.

Um nur eine einzige Stufung des Bremsmomentenanteiles des Pumpenretarders zu realisieren, sind in der Leitung 12 ein Ventil 16 und in einem Bypass dazu ein Umschaltventil 15 vorgesehen, die es ermöglichen, das zwischen Flüssigkeitsaustritt 13 aus dem Retarder und dem Motor in einer ersten Schaltstellung des Umschaltventiles 15 ein maximaler Durchflußquerschnitt der Leitung 12 freigegeben wird, während in einer zweiten Schaltstellung des Umschaltventiles eine drosselartige Verengung zwischen Retarder 4 und Motor 2 wirksam wird, die am Retarder einen starken Gegendruck hervorruft. Dazu ist das Ventil 15 beispielsweise als Zwei-Wege-Ventil ausgeführt.

Die erste Schaltstellung entspricht dabei dem Nicht-Bremsbetrieb, d.h. der Pumpenretarder fördert die Kühlmittelflüssigkeit 7 im Kühlkreislauf. Die zweite Schaltstellung entspricht dem Bremsbetrieb, d.h. der Pumpenretarder erzeugt ein hohes Bremsmoment. Das Verhältnis zwischen Zu- und Ablaufquerschnitt aus dem Retarder im Bremsbetrieb beträgt vorzugsweise 4 bis 7 im Nicht-Bremsbetrieb 0,5 bis 2. Unter Zu- und Ablaufquerschnitt sind dabei auch die Durchflußquerschnitte in den Zulauf- und Ablaufleitungen zu verstehen.

Die Figur 3a verdeutlicht einen Ausschnitt aus einer Antriebseinheit analog zu Figur 1, jedoch modifiziert für den Fall einer möglichen stufenlosen Einstellbarkeit des Bremsmomentenanteiles Pᵣₑₜ des Pumpenretarders. Für gleiche Elemente werden deshalb die gleichen Bezugszeichen verwendet. Schematisch sind hier nur der Pumpenretarder 4 sowie der Zulauf, d.h. die Leitung 9 und der Ablauf aus dem Pumpenretarder 4 zum Motor 2 - die Leitung 12 angedeutet. In der Ablaufleitung 12 ist ein stufenlos regelbares Drosselventil 20 angeordnet. Mit diesem ist eine stufenlose Verengung des Durchflußquerschnittes der Leitung 12 zwischen Pumpenretarder 4 und Motor 2 möglich. Der Durchflußquerschnitt der Leitung 12 bzw. der Durchflußquerschnitt im Ventil kann dabei von einem maximalen Durchflußquerschnitt im Nicht-Bremsbetrieb bis zu einem sehr geringen Durchflußquerschnitt im Bremsbetrieb stufenlos eingestellt werden.

Das Verhältnis von Zu- zu Ablaufquerschnitt des Retarders, d.h. das Verhältnis der Durchflußquerschnitte der Leitungen 9 und 12 bzw. der von den Ventilenfreigegebenen Querschnitte zueinander beträgt im Nicht-Bremsbetrieb vorzugweise 1, d.h. beide Durchflußquerschnitte sind im wesentlichen gleich; im Bremsbetrieb ist vorzugsweise ein Verhältnis zwischen 4 und 7 zu wählen, d.h. der Querschnitt des Zulaufes ist im Bremsbetrieb 4 bis 7fach so groß wie der Querschnitt des Ablaufes im Bremsbetrieb.

Es besteht jedoch auch die hier nicht dargestellte Möglichkeit, das Drosselventil 20 im Zulauf, d.h. der Leitung 9 vorzusehen. Der Querschnitt der Zufuhrleitung, d.h. Leitung 9, muß für diesen Fall jedoch 4 bis 7 fach so groß gewählt werden, wie der Querschnitt der Abfuhrleitung 12. Im Pumpenbetrieb ist der Querschnitt der Zufuhrleitung zur Realisierung des erforderlichen Querschnittsverhältnisses zu verengen, um im wesentlichen gleiche Durchflußquerschnnitte in beiden Leitungen zu erzielen. Im Bremsbetrieb ist der Durchflußquerschnitt der Zufuhrleitung, d.h. der Leitung 9 derart zu vergrößern, daß dieser 4 bis 7fach so groß ist, wie der Durchflußquerschnitt im Ablauf, d.h. Leitung 12, um einen Gegendruck am Pumpenretarder wirken zu lassen.

In der Figur 3b ist die stufenlose Veränderbarkeit des Bremsmomentes, wie diese mit einer derartigen Anordnung realisiert werden kann, im Diagramm dargestellt.

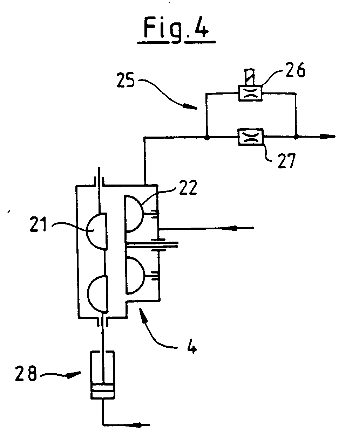

Die Figur 4 verdeutlicht einen Ausschnitt aus einer Antriebseinheit analog zu Figur 2, jedoch modifiziert für den Fall einer möglichen stufenlosen Einstellbarkeit des Bremsmomentenanteiles Pᵣₑₜ des Pumpenretarders mittels der Statorschaufelradverschiebung. Für gleiche Elemente werden deshalb die gleichen Bezugszeichen verwendet. Schematisch sind hier nur der Pumpenretarder 4 sowie der Zulauf, d.h. die Leitung 9 und der Ablauf aus dem Pumpenretarder 4 zum Motor 2 - die Leitung 12 angedeutet. Die Steuerung des Bremsmomentes erfolgt hier durch Verschiebung des Statorschaufelrades gegenüber dem Rotorschaufelrad des Retarders. Eine Ventilanordnung 25 realisiert den Umschaltvorgang vom Nicht- zum Bremsbetrieb. Die Ventialanordnung umfaßt die Ventile 26 und 27, wobei das Umschaltventil 26 im Bypass zum Ventil 27 angeordnet ist.

Das Umschaltventil 26 weist zwei Schaltstellungen auf, die es ermöglichen, das zwischen Flüssigkeitsaustritt 13 aus dem Retarder und dem Motor in einer ersten Schaltstellung des Umschaltventiles 26 ein maximaler Durchflußquerschnitt der Leitung 12 freigegeben wird, während in einer zweiten Schaltstellung des Umschaltventiles 26 eine drosselartige Verengung zwischen Retarder 4 und Motor 2 wirksam wird, die am Retarder einen starken Gegendruck hervorruft. Dazu ist das Ventil 26 beispielsweise als Zwei-Wege-Ventil ausgeführt. Das Ventil 27 ist nicht verstellbar.

Die erste Schaltstellung entspricht dabei dem Nicht-Bremsbetrieb, d.h. der Pumpenretarder fördert die Kühlmittelflüssigkeit 7 im Kühlkreislauf. Die zweite Schaltstellung entspricht dem Bremsbetrieb, d.h. der Pumpenretarder 4 erzeugt ein hohes Bremsmoment.

Im Bremsbetrieb, hier dargestellt, sind beispielsweise das Statorschaufelrad 21 und das Rotorschaufelrad 22 für das höchste zu erzeugende Bremsmomentvorzugsweise koaxial zueinander angeordnet.

Im Nicht-Bremsbetrieb wälzt der Pumpenretarder aufgrund der Rotorschaufelradrotation das Kühlmittel 7 im Kühlmittelkreislauf 6 um.

Die Steuerung des Bremsmomentes im Bremsbetrieb erfolgt durch die Verschiebung des Statorschaufelrades 21 in eine exzentrische Lage zum Rotorschaufelrad 22 durch geeignete Mittel, beispielsweise über eine Verstelleinrichtung 28. Möglichkeiten der Statorschaufelradverschiebung sind aus den folgenden Druckschriften bekannt:
1. DE 31 13 408 C1
2. DE 40 10 970 A1
Deshalb wird im einzelnen nicht darauf eingegangen.
Das Bremsleistungsdiagramm für den Bremsleistungsanteil des Retarders entspricht dem in Figur 3b beschriebenen.

## Patentansprüche

1. Antriebseinheit für Fahrzeuge;
1.1 mit einem Motor (2) und einem Getriebe;
1.2 mit einem hydrodynamischen Retarder (4);
1.3 der Retarder (4) befindet sich mit dem Motor (2) in ständiger Triebverbindung;
1.4 mit einem Kühlmittelkreislauf (6), dessen Kühlmittel (7) zugleich Arbeitsmittel des Retarders (4) ist;
1.5 der Retarder (4) ist als Pumpe des Kühlmittels ausnutzbar; gekennzeichnet durch die folgenden Merkmale:
1.6 der Retarder (4) ist dem Getriebe vorgeschaltet
1.7 der Retarder ist mit einer Motorbremse zu einer Gesamt-Bremseinheit (GBE) zusammenschaltbar;
1.8 die Gesamt-Bremseinheit ist derart gestaltet, daß der Retarder bei einem Bremsvorgang zeitlich vor der Motorbremse eingreifen kann.

2. Verfahren zum Betreiben einer Antriebseinheit gemäß Anspruch 1, gekennzeichnet durch die folgenden Merkmale:
2.1 mit dem Retarder (4) wird ein erster Anteil der Gesamt-Bremsleistung aufgebracht;
2.2 mit der Motorbremse wird ein zweiter Anteil der Gesamt-Bremsleistung aufgebracht.

3. Verfahren nach Anspruch 2, dadurch gekennzeichnet, daß die beiden Anteile jeweils die Hälfte der Gesamt-Bremsleistung ausmachen.

4. Verfahren nach einem der Ansprüche 2 oder 3, dadurch gekennzeichnet, daß der erste Anteil der Gesamtbremsleistung durch den Retarder (4) stufenlos aufbringbar ist.

5. Verfahren nach einem der Ansprüch 2 bis 4, dadurch gekennzeichnet, daß der Retarder (4) zum Heranziehen eines ersten Anteils der Gesamt-Bremsleistung herangezogen wird, die Motorbremse zum Aufbringen eines zweiten Anteils und sodann der Retarder (4) zum Aufbringen eines dritten Anteils.

## Claims

1. Drive unit for vehicles;
1.1 with a engine (2) and a gearbox;
1.2 with a hydrodynamic retarder (4);
1.3 the retarder (4) is in continuous driving connection with the engine (2);
1.4 with a coolant circuit (6), whereof the coolant (7) is at the same time the operating medium of the retarder (4);
1.5 the retarder (4) can be used as a pump for the coolant; characterised by the following features:
1.6 the retarder (4) is connected in series with the gearbox
1.7 the retarder is able to be interconnected with an engine brake to form a total braking unit (GBE);
1.8 the total braking unit is designed so that at the time of a braking operation the retarder may come into operation before the engine brake.

2. Method for operating a drive unit according to Claim 1, characterised by the following features:
2.1 a first part of the total brake power is applied by the retarder (4);
2.2 a second part of the total brake power is applied by the engine brake.

3. Method according to Claim 2, characterised in that the two parts respectively make up half the total brake power.

4. Method according to one of Claims 2 or 3, characterised in that the first part of the total brake power can be applied continuously by the retarder (4).

5. Method according to one of Claims 2 to 4, characterised in that the retarder (4) is used for applying a first part of the total brake power, the engine brake is used for applying a second part and then the retarder (4) for applying a third part.

## Revendications

1. Unité d'entraînement pour véhicules ;
avec un moteur **(2)** et une boite de vitesses ;
avec un ralentisseur hydrodynamique **(4)** ;
Le ralentisseur **(4)** se trouvant en liaison d'entraînement permanente avec le moteur **(2)** ;
avec un circuit de fluide de refroidissement **(6)**, dont le fluide de refroidissement **(7)** est en même temps le fluide de travail du ralentisseur **(4)** ;
le ralentisseur **(4)** pouvant être utilisé comme pompe pour le fluide de refroidissement,
caractérisée en ce que
le ralentisseur **(4)** est monté en amont de la boite de vitesse,
le ralentisseur peut être couplé à un frein moteur pour former une unité globale de freinage **(GBE)**,
l'unité globale de freinage est conformée en sorte que, lors d'une phase de freinage, le ralentisseur peut intervenir avant le frein moteur.

2. Procédé d'actionnement d'une unité d'entraînement selon la revendication 1, caractérisé en ce que
le ralentisseur **(4)** applique une première partie de la puissance de freinage totale,
le frein moteur applique une deuxième partie de la puissance de freinage totale.

3. Procédé selon la revendication 2, caractérisé en ce que les deux parties représentent chacune la moitié de la puissance de freinage totale.

4. Procédé selon l'une des revendications 2 ou 3, caractérisé en ce que la première partie de la puissance de freinage totale peut être appliquée de manière continue par le ralentisseur.

5. Procédé selon l'une des revendications 2 à 4, caractérisé en ce qu'on met à contribution le ralentisseur **(4)** pour appliquer une première partie de la puissance de freinage totale, le frein moteur pour appliquer une deuxième partie, puis le ralentisseur **(4)** pour appliquer une troisième partie.
